# EUROPÄISCHE PATENTSCHRIFT

(11) **EP 1 991 449 B1**
(45) Veröffentlichungstag und Bekanntmachung des Hinweises auf die Patenterteilung: **05.05.2010**
(21) Anmeldenummer: 07711661.4
(22) Anmeldetag: 26.02.2007
(51) Int. Cl.: B60R 21/34

(54) **AKTUATOR FUR EINE AKTIVE HAUBE**
ACTUATOR FOR AN ACTIVE HOOD
ACTIONNEUR POUR CAPOT ACTIF

(30) Priorität: 27.02.2006 DE 102006008901
(43) Veröffentlichungstag der Anmeldung: 19.11.2008
(73) Patentinhaber: GM Global Technology Operations, Inc., Detroit, MI 48265-300 (US)
(72) Erfinder: SCHÄFER, Joachim, 64297 Darmstadt (DE); SCHEUCH, Volker, 63877 Sailauf (DE); SCHMIDT, Werner, 63755 Alzenau-Hörstein (DE); ZILG, Martin, 63741 Aschaffenburg/Nilkheim (DE)
(74) Vertreter: Strauss, Peter
(86) Internationale Anmeldenummer: PCT/EP2007/001635
(87) Internationale Veröffentlichungsnummer: WO 2007/098906

(56) Entgegenhaltungen:
- EP-A- 1 745 993
- WO-A-2004/108486
- DE-A1- 10 247 801
- DE-U1- 20 013 256

## Beschreibung

Die vorliegende Erfindung betrifft einen pneumatischen Aktuator für eine aktive Haube eines Kraftfahrzeuges nach dem Oberbegriff des Anspruchs 1. Aktuatoren dieses Typs sind aus der gattungsbildenden DE 102 47 801 A1 oder EP 1 745 993 A1 und DE 200 13 256 U1 bekannt.Um die Aufstellbewegung der Haube anzutreiben, müssen die Federelemente der bekannten Aktuatoren in der Ruhestellung eine Deformation aufweisen, die dem Hub des Aktuators wenigstens gleichkommt. Dies macht eine beträchtliche Länge der Federn erforderlich, und dementsprechend groß müssen die Aktuatoren sein. Es besteht daher Bedarf nach einem Aktuator für eine alternative Haube mit einem alternativen, einfachen und preiswerten Aufbau.

Dieser Bedarf wird befriedigt durch einen Aktuator mit den Merkmalen des Anspruchs 1. Die Vorspannkraft des Federelementes ist zweckmäßigerweise wenigstens so groß, wie die unter normalen Betriebsbedingungen beim Fahren und beim Auf- und Zuschwenken der Haube auf die Haube einwirkenden Kräfte, so dass die Haube unter normalen Betriebsbedingungen scheinbar starr in der Ruhestellung verbleibt.

Vorzugsweise ist ein Haubenscharnier unmittelbar von dem Kolben getragen. So kann bei einem Unfall das Scharnier zusammen mit der Haube angehoben werden und muss nicht, wie bei vielen herkömmlichen Anordnungen der Fall, zuvor zerlegt werden, um die Anhebung der Haube zu ermöglichen.

Um ein Spiel der Haube auch quer zur Bewegungsrichtung des Kolbens wirksam zu begrenzen, ist es vorteilhaft, wenn das Federelement an dem Kolben benachbart zu dessen dem Haubenscharnier benachbarten Ende angreift.

Wenn das Federelement von einer Stange des Kolbens durchsetzt ist, erübrigen sich weitere Maßnahmenzur Befestigung des Federelementes an dem Aktuator.

Vorzugsweise ist das Federelement einerseits zwischen dem Zylinder und andererseits einem an dem Kolben befestigten Scharnierträger des Haubenscharniers eingeklemmt. Der Scharnierträger kann an dem Kolben auf einfache Weise durch Einschrauben einer Stange des Kolbens befestigt sein.

Eine Entriegelung des Kolbens und seine Bewegung in die ausgefahrene Stellung sind vorzugsweise von einer gleichen Druckquelle antreibbar.

Um dies zu erreichen, weist der Zylinder vorzugsweise eine Einlassleitung für ein Arbeitsgas auf, die sich in Bewegungsrichtung des Kolbens erstreckt, und ein Verriegelungsvorsprung des Kolbens ist in der Einlassleitung durch einen Querriegel gehalten.

Der Verriegelungsvorsprung füllt vorzugsweise den freien Querschnitt der Einlassleitung aus. Dadurch wird bei Betätigung des Aktuators zunächst verhindert, dass das Arbeitsgas in den Zylinder einströmt und gegen den Kolben drückt, noch bevor der Querriegel sich von dem Verriegelungsvorsprung des Kolbens gelöst hat.

Um die Bewegung des Querriegels anzutreiben, hat dieser vorzugsweise eine dem Arbeitsgas ausgesetzte Stirnseite und ist durch Druck des Arbeitsgases auf die Stirnseite aus der Einlassleitung verdrängbar.

Um die Verdrängung des Querriegels zu erleichtern, ist letzterer vorzugsweise zu seiner Stirnseite hin verjüngt.

Wenn der Querriegel eine Bohrung des Verriegelungsvorsprungs durchsetzt, ist er vorzugsweise mit wenigstens einer die Innenfläche der Bohrung berührenden Rippe versehen. Diese Formgebung verringert die mögliche Kontaktfläche zwischen dem Querriegel und der Innenfläche der Bohrung und erleichtert so das Verdrängen des Querriegels, was vor allem im Falle einer nicht optimalen Oberflächenqualität von Querriegel und Bohrung, zum Beispiel aufgrund von Korrosion, von Bedeutung ist.

Rippen dieser Art können insbesondere dadurch realisiert sein, dass die Bohrung einen runden und der Querriegel einen vieleckigen Querschnitt aufweist. ,

Zweckmäßig ist nicht zuletzt, dass der Querriegel an einem von seiner Stirnseite abgewandten Ende eine Schulter aufweist, die die Bohrung überdeckt. Diese Schulter gewährleistet, dass auch der Druck von Arbeitsgas, welches zwischen den Querriegel und die Innenfläche der Bohrung eindringt, genutzt wird, um den Querriegel zurückzudrängen.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: ein Kraftfahrzeug mit einer von Aktuatoren in einer angehobenen Stellung gehaltenen Haube;
- Fig. 2: eine perspektivische auseinandergezogene Ansicht eines Aktuators gemäß der Erfindung;
- Fig. 3: einen schematischen Schnitt durch den Aktuator der Fig. 2; und
- Fig. 4: eine perspektivische Ansicht eines in dem Aktuator verwendbaren Querriegels.

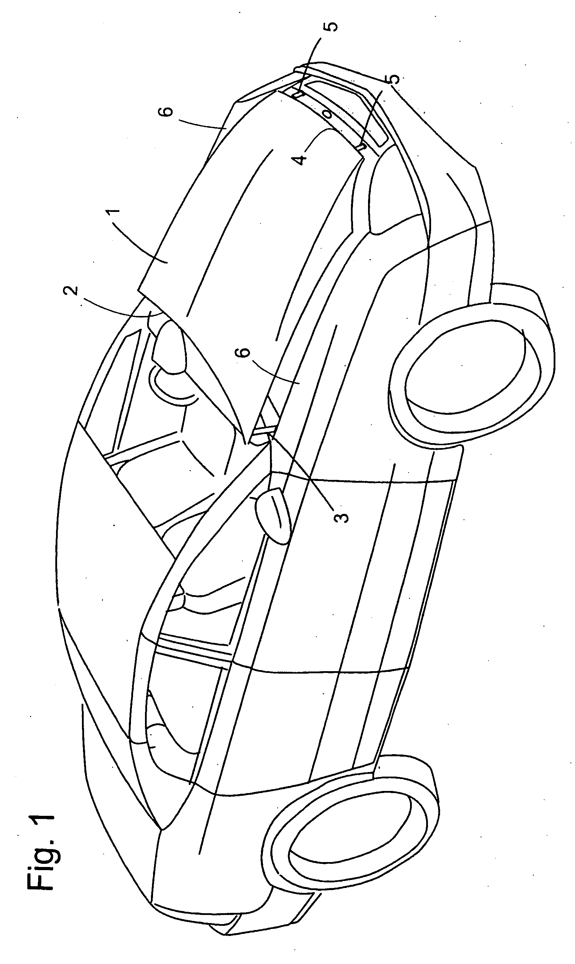

Fig. 1 zeigt schematisch ein Kraftfahrzeug mit einer Motorhaube 1, die durch benachbart zum vorderen bzw. hinteren Rand der Haube 4, 2 angeordnete Aktuatoren 5, 3 in einer gegenüber einer Normalstellung, in der sie mit benachbarten Karosserieteilen 6 bündig ist, angehobenen Stellung gehalten ist. Die Haube 1 ist ausschließlich durch die Aktuatoren 3, 5 unterstützt.

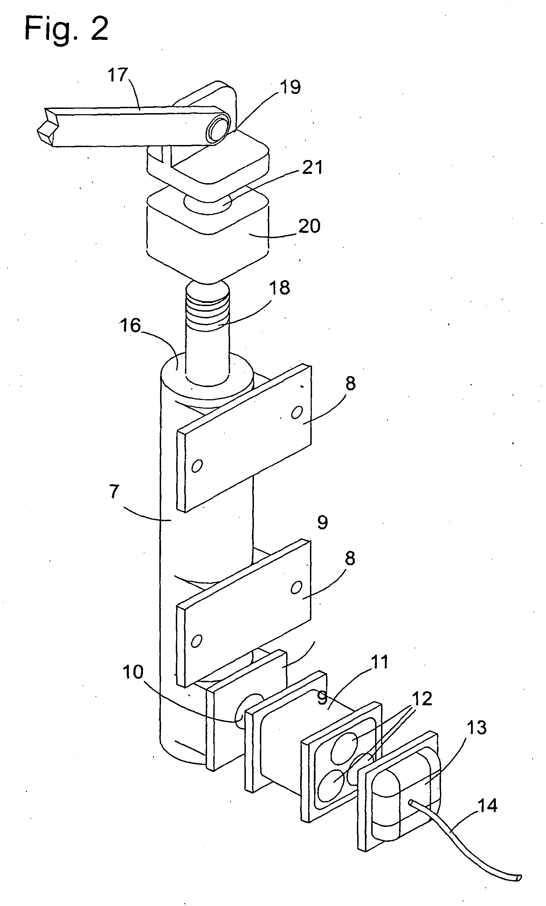

Fig. 2 zeigt eine perspektivische auseinandergezogene Ansicht eines der zwei hinteren Aktuatoren 3. Er umfasst einen langgestreckten Zylinder 7, der zwei Befestigungsflansche zur Montage des Zylinders 7 an einem starren Rahmen des Kraftfahrzeuges trägt. An einem unteren Ende des Zylinders 7 ist ein Gaseinlassflansch 9 mit Einlassöffnung 10 angeordnet. Ein Gasgeneratorträger 11 ist vorgesehen, um gasdicht an dem Einlassflansch 9 befestigt zu werden. Der Gasgeneratorträger 11 weist Kammern für drei Gasgeneratoren 12 auf, die mit der Einlassöffnung 10 verbunden sind. In einem Durchgang zwischen jeder Kammer und der Einlassöffnung 10 kann jeweils eine in der Figur nicht gezeigte zerstörbare Trennwand in dem Gasgeneratorträger 11 angebracht sein, die aufreißt, wenn der Gasgenerator 12 in der ihr zugeordneten Kammer gezündet wird, die aber einen in der ihr zugeordneten Kammer untergebrachten Gasgenerator 12 davor schützt, durch die Explosion eines Gasgenerators 12 in einer benachbarten Kammer mitgezündet zu werden.

Ein an der vom Zylinder 7 abgewandten Seite des Gasgeneratorträgers 11 zu montierender Deckel 13 enthält eine elektronische Zündschaltung, die jeweils bei Empfang eines Zündbefehls über ein Signalkabel 14 einen der Gasgeneratoren 12 zündet.

Der Aktuator der Fig. 2 ist somit in der Lage, drei Aufstellbewegungen der Haube 1 anzutreiben, bevor er verbraucht ist und ausgetauscht werden muss.

Es liegt auf der Hand, dass auch mehr oder weniger als drei Gasgeneratoren 12 in dem Gasgeneratorträger 11 untergebracht sein können. Die Zahl der Gasgeneratoren wird im Allgemeinen jedoch nicht größer sein als fünf oder sechs, da die Zahl der zu erwartenden Haubenaufstellbewegungen während der Lebensdauer eines Kraftfahrzeuges beschränkt ist.

Grundsätzlich käme auch ein Gasgeneratorträger mit einem einzigen Gasgenerator in Frage, der dann jedes Mal nach einer Aufstellung der Haube 1 ausgetauscht werden müsste, während der Zylinder selber im Fahrzeug verbleiben könnte. Ein Austausch des Generatorträgers, der dann nach jeder Aufstellung der Haube 1 erforderlich wäre, würde jedoch erhebliche Sicherheitsvorkehrungen erfordern, die in einer Kfz-Werkstatt nur schwierig zu gewährleisten sind.

Eine an einer oberen Stirnseite 16 des Zylinders 7 austretende Kolbenstange 18 ist an ihrer Spitze mit einem Gewinde versehen. Das Gewinde ist vorgesehen, um in einen Scharnierträger 19 eingeschraubt zu werden, an dem ein Lenker oder, im bevorzugten Fall eines Eingelenkscharniers, ein fest an der Haube 1 angebrachtes Scharnierteil 17 angelenkt ist. Ein Pufferstück 20 aus Hartgummi oder einem anderen geringfügig elastisch verformbaren Material mit einer zentralen Bohrung 21 ist vorgesehen, um auf die Kolbenstange 18 aufgesteckt und in der Ruhestellung des Aktuators zwischen dem Scharnierträger 19 und der Stirnseite 16 des Zylinders eingeklemmt und verformt zu werden. Hierfür ist die Kolbentange 18 im Ruhezustand in dem Zylinder 7 verriegelt, wie im Folgenden noch genauer beschrieben wird. Die Verformung des Pufferstücks 20 ist stark genug, um eine Rückstellkraft des Pufferstücks 20 hervorzurufen, die größer ist als jede unter normalen Betriebsbedingungen, beim Fahren oder beim Öffnen und Schließen der Haube 1, auf die Haube wirkende Kraft. So findet unter normalen Betriebsbedingungen keine zusätzliche Verformung des Pufferstücks 20 statt, das heißt, der Scharnierträger 19 ist effektiv unbeweglich in Bezug auf den Zylinder 7 und die diesen tragende Karosserie.

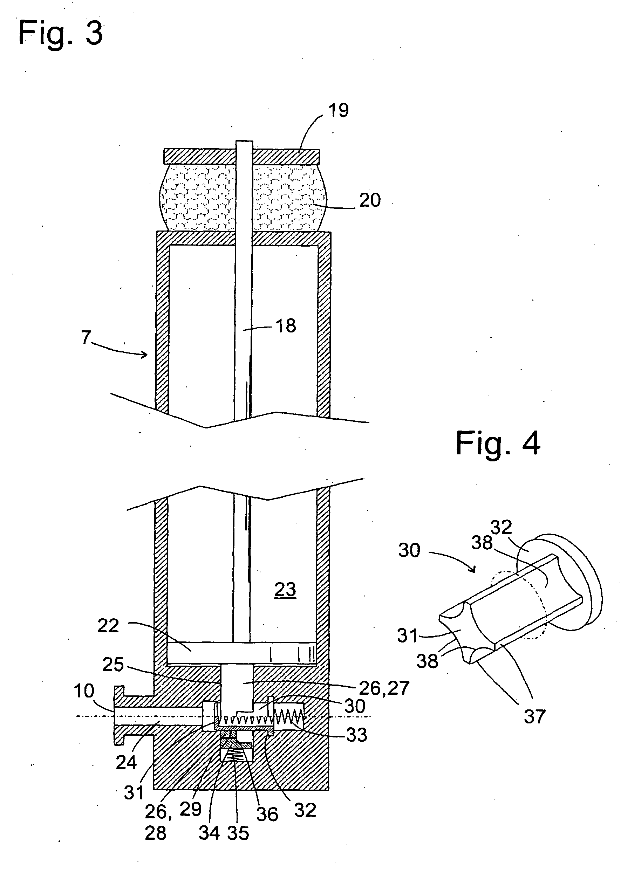

Fig. 3 zeigt den Zylinder 7 der Fig. 2 in einem axialen Schnitt. Die Kolbenstange 18 hängt zusammen mit einer Kolbenplatte 22, die sich in der in der Figur gezeigten Ruhestellung am unteren Ende einer internen Kammer 23 des Zylinders befindet. Eine Gaseinlassleitung hat einen äußeren Abschnitt 24, der sich von der Einlassöffnung 10 senkrecht zur Längsachse des Zylinders 7 erstreckt, und einen axial orientierten inneren Abschnitt 25, der in die Kammer 23 an deren Boden einmündet. In der in der Figur gezeigten Ruhestellung greift in den inneren Abschnitt 25 ein Verriegelungsvorsprung 26 ein, der Teil des Kolbens 15 ist. Ein oberer Abschnitt 27 des Verriegelungsvorsprungs 26 füllt den inneren Abschnitt 25 der Gaseinlassleitung auf ihrem gesamten Querschnitt aus. In einem unteren Abschnitt 28 ist der Querschnitt des Vorsprungs 26 reduziert. Durch diesen unteren Abschnitt 28 erstreckt sich eine auf den äußeren Abschnitt 24 der Gaseinlassleitung ausgerichtete Bohrung 29. In der Bohrung 29 ist ein Querriegel 30 verschiebbar aufgenommen. Er hat die Form eines Zylinders, der zu seiner der Einlassöffnung 10 zugewandten Stirnseite 31 hin geringfügig verjüngt ist. Ein umlaufender Flansch an der gegenüberliegenden Stirnseite des Zylinders bildet eine Schulter 32, die durch eine Feder 33 gegen einen Anschlag gedrückt ist.

In einer den inneren Abschnitt 25 der Gaseinlassleitung nach unten verlängernden Sackbohrung befindet sich ein Sperrkörper 34 von gestuftem Querschnitt, der durch eine Feder 35 gegen die untere Spitze des Verriegelungsvorsprungs 26 gedrückt gehalten ist.

Wenn einer der Gasgeneratoren 12 gezündet wird, so drückt das von diesem erzeugte Treibgas zunächst im Wesentlichen gegen die Stirnseite 31 des Querriegels 30 und drängt diesen zurück gegen die Kraft der Feder 33. Da der obere Abschnitt 27 des Verriegelungsvorsprungs 26 zunächst noch die Gaseinlassleitung versperrt, bleibt der Druck in der Kammer 23 niedrig, und die zum Verschieben des Querriegels 30 erforderliche Reibungskraft ist lediglich durch das Pufferstück 20 erzeugt, welches den Scharnierträger 19 nach oben drückt.

Sobald der Querriegel 30 aus der Bohrung 29 verdrängt ist, ist die Unterseite des Verriegelungsvorsprungs 26 dem Gasdruck ausgesetzt, und er wird durch den Druck des Treibgases, das schließlich auch die Kammer 23 erreicht, aufwärts getrieben. Der Sperrkörper 34 folgt, angetrieben von der Feder 35, der Bewegung des Verriegelungsvorsprungs 26, bis seine Stufe 36 am Querriegel 30 zur Anlage kommt. Sie verhindert, dass der Querriegel 30 unter dem Druck der Feder 33 in die in der Figur gezeigte Ausgangsstellung zurückkehrt.

Zu einem späteren Zeitpunkt, wenn der Druck des Treibgases abgebaut ist, kann der Kolben 15 einfach wieder in den Zylinder 7 hineingedrückt werden. Dabei greift auch der Verriegelungsvorsprung 26 wieder in die Gaseinlassleitung ein und drängt dabei schließlich den Sperrkörper 34 zurück, woraufhin schließlich der Querriegel 30 wieder in die Bohrung 29 einrückt. Der Aktuator ist nun bereit, erneut ausgelöst zu werden.

Fig. 4 zeigt eine abgewandelte Ausgestaltung des Querriegels 30. Wie der Querriegel 30 der Figur 3 ist er vorgesehen, um in eine runde Bohrung 29 einzugreifen, deren Umriss als strichpunktierte Linie in Fig. 4 angedeutet ist. Der Querriegel selbst ist jedoch nicht zylindrisch, sondern hat einen rautenähnlichen Querschnitt mit vier Rippen 37 an den Ecken der Raute, die in der Lage sind, die Innenseite der Bohrung 29 zu berühren, und die voneinander durch Aussparungen 38 getrennt sind. Die durch diese Querschnittsgestaltung erzielte Verringerung der Kontaktfläche zwischen Querriegel 30 und Bohrung 29 verhindert ein Steckenbleiben des Querriegels 30 auch dann, wenn dessen Oberflächen oder die der Bohrung 29 bereits mehrfach den heißen Treibgasen von einem Gasgenerator 12 ausgesetzt gewesen sind und dadurch eventuell geringfügig angegriffen sind.

### Bezugszeichenliste

- Motorhaube: 1
- Rand: 2
- Aktuator: 3
- Rand: 4
- Aktuator: 5
- Karosserieteil: 6
- Zylinder: 7
- Befestigungsflansch: 8
- Gaseinlassflansch: 9
- Einlassöffnung: 10
- Gasgeneratorträger: 11
- Gasgenerator: 12
- Deckel: 13
- Signalkabel: 14
- Kolben: 15
- Stirnseite: 16
- Scharnierteil: 17
- Kolbenstange: 18
- Scharnierträger: 19
- Pufferstück: 20
- Bohrung: 21
- Kolbenplatte: 22
- Kammer: 23
- äußerer Abschnitt: 24
- innerer Abschnitt: 25
- Verriegelungsvorsprung: 26
- oberer Abschnitt: 27
- unterer Abschnitt: 28
- Bohrung: 29
- Querriegel: 30
- Stirnseite: 31
- Schulter: 32
- Feder: 33
- Sperrkörper: 34
- Feder: 35
- Stufe: 36
- Rippen: 37
- Aussparung: 38

## Patentansprüche

1. Pneumatischer Aktuator (3, 5) für eine aktive Haube (1), mit einem Zylinder (7) und einem an dem Zylinder (7) zwischen einer Ruhestellung und einer ausgefahrenen Stellung geführt bewegbaren und in der Ruhestellung verriegelbaren Kolben (18, 22), der in der Ruhestellung durch ein Federelement (20) in Richtung der ausgefahrenen Stellung vorgespannt ist, **dadurch gekennzeichnet, dass** das Federelement (20) ein gummielastischer Körper ist, dessen Verformung weniger als ein Zehntel des Kolbenhubs beträgt.

2. Aktuator nach Anspruch 1, **dadurch gekennzeichnet, dass** der Kolben (18, 22) ein Haubenscharnier (19) trägt.

3. Aktuator nach Anspruch 2, **dadurch gekennzeichnet, dass** das Federelement (20) an dem Kolben (18, 22) benachbart zu dessen dem Haubenscharnier (19) benachbarten Ende angreift.

4. Aktuator nach einem der vorhergehenden Ansprüche, **dadurch gekennzeichnet, dass** das Federelement (20) von einer Stange (18) des Kolbens (18, 22) durchsetzt ist.

5. Aktuator nach einem der vorhergehenden Ansprüche, **dadurch gekennzeichnet, dass** das Federelement (20) zwischen dem Zylinder (7) einerseits und einem an dem Kolben (18, 22) befestigten Scharnierträger (19) des Haubenscharniers eingeklemmt ist.

6. Aktuator nach einem der vorhergehenden Ansprüche, **dadurch gekennzeichnet, dass** eine Stange (18) des Kolbens (18, 22) in einen Scharnierträger (19) des Haubenscharniers eingeschraubt ist.

7. Aktuator nach einem der vorhergehenden Ansprüche, **dadurch gekennzeichnet, dass** eine Entriegelung des Kolbens (18, 22) und seine Bewegung in die ausgefahrene Stellung von einer gleichen Druckquelle (12) antreibbar sind.

8. Aktuator nach Anspruch 6 oder 7, **dadurch gekennzeichnet, dass** der Zylinder (7) eine Einlassleitung (25) für ein Arbeitsgas aufweist, die sich in Bewegungsrichtung des Kolbens (18, 22) erstreckt, und dass ein Verriegelungsvorsprung (26) des Kolbens in der Einlassleitung (25) durch einen Querriegel (30) gehalten ist.

9. Aktuator nach Anspruch 8, **dadurch gekennzeichnet, dass** der Verriegelungsvorsprung (26) den freien Querschnitt der Einlassleitung (25) ausfüllt.

10. Aktuator nach Anspruch 8 oder 9, **dadurch gekennzeichnet, dass** der Querriegel (30) eine dem Arbeitsgas ausgesetzte Stirnseite (31) aufweist und durch Druck des Arbeitsgases auf die Stirnseite (31) aus der Einlassleitung (25) verdrängbar ist.

11. Aktuator nach Anspruch 10, **dadurch gekennzeichnet, dass** der Querriegel (30) zu seiner Stirnseite (31) hin verjüngt ist.

12. Aktuator nach Anspruch 10 oder 11, **dadurch gekennzeichnet, dass** der Querriegel (30) eine Bohrung (29) des Verriegelungsvorsprungs (26) durchsetzt und wenigstens eine die Innenfläche der Bohrung (29) berührende Rippe (37) aufweist.

13. Aktuator nach Anspruch 12, **dadurch gekennzeichnet, dass** die Bohrung (29) einen runden und der Querriegel (30) einen vieleckigen Querschnitt aufweist.

14. Aktuator nach einem der Ansprüche 10 bis 13, **dadurch gekennzeichnet, dass** der Querriegel (30) an einem von seiner Stirnseite (31) abgewandten Ende eine Schulter (32) aufweist, die die Bohrung (29) überdeckt.

## Claims

1. A pneumatic actuator (3, 5) for an active hood (1), comprising a cylinder (7) and a piston (18, 22) which is movable in a guided manner on the cylinder (7) between an idle position and an extended position and can be locked in the idle position, and which is pretensioned in the idle position by a spring element (20) in the direction of the extended position, **characterized in that** the spring element (20) is a rubber-elastic body whose deformation is less than one-tenth of the piston stroke.

2. An actuator according to claim 1, **characterized in that** the piston (18, 22) carries a hood hinge (19).

3. An actuator according to claim 2, **characterized in that** the spring element (20) acts on the piston (18, 22) adjacent to its end which is adjacent to the hood hinge (19).

4. An actuator according to one of the preceding claims, **characterized in that** the spring element (20) is penetrated by a rod (18) of the piston (18, 22).

5. An actuator according to one of the preceding claims, **characterized in that** the spring element (20) is clamped between the cylinder (7) on the one hand and a hinge support (19) of the hood hinge which is fastened to the piston (18, 22).

6. An actuator according to one of the preceding claims, **characterized in that** a rod (18) of the piston (18, 22) is screwed into a hinge support (19) of the hood hinge.

7. An actuator according to one of the preceding claims, **characterized in that** an unlocking of the piston (18, 22) and its movement to the extended position can be driven by the same pressure source (12).

8. An actuator according to claim 6 or 7, **characterized in that** the cylinder (7) comprises an inlet line (25) for a working gas, which line extends in the direction of movement of the piston (18, 22), and a locking projection (26) of the piston is held in the inlet line (25) by a crossbar (30).

9. An actuator according to claim 8, **characterized in that** the locking projection (26) fills out the free cross section of the inlet line (25).

10. An actuator according to claim 8 or 9, **characterized in that** the crossbar (30) comprises a face (31) which is subjected to the working gas and can be pushed out of the inlet line (25) by pressure of the working gas on the face (31).

11. An actuator according to claim 10, **characterized in that** the crossbar (30) tapers towards its face (31).

12. An actuator according to claim 10 or 11, **characterized in that** the crossbar (30) penetrates a bore hole (29) of the locking projection (26) and comprises at least one rib (37) touching the inside surface of the bore hole (29).

13. An actuator according to claim 12, **characterized in that** the bore hole (29) has a round cross section and the crossbar (30) has a polygonal cross section.

14. An actuator according to one of the claims 10 to 13, **characterized in that** the crossbar (30) comprises a shoulder (32) at one end facing away from its face (31), which shoulder covers the bore hole (29).

## Revendications

1. Vérin pneumatique (3, 5) pour un capot actif (1), avec un cylindre (7) et un piston (18, 22) pouvant être déplacé de façon guidée sur le cylindre (7) entre une position de repos et une position sortie et pouvant être verrouillé dans la position de repos, qui est précontraint dans la position de repos par un élément de ressort (20) en direction de la position sortie, **caractérisé en ce que** l'élément de ressort (20) est un bloc élastique caoutchouteux dont la déformation représente moins d'un dixième de la course du piston.

2. Vérin selon la revendication 1, **caractérisé en ce que** le piston (18, 22) porte une charnière de capot (19).

3. Vérin selon la revendication 2, **caractérisé en ce que** l'élément de ressort (20) se met en prise sur le piston (18, 22) à proximité de l'extrémité de celui-ci voisine de la charnière de capot (19).

4. Vérin selon l'une des revendications précédentes, **caractérisé en ce que** l'élément de ressort (20) est traversé par une tige (18) du piston (18, 22).

5. Vérin selon l'une des revendications précédentes, **caractérisé en ce que** l'élément de ressort (20) est serré entre le cylindre (7) d'une part et un support de charnière (19) de la charnière de capot fixé sur le piston (18, 22).

6. Vérin selon l'une des revendications précédentes, **caractérisé en ce qu'**une tige (18) du piston (18, 22) est vissée dans un support de charnière (19) de la charnière de capot.

7. Vérin selon l'une des revendications précédentes, **caractérisé en ce qu'**un déverrouillage du piston (18, 22) et son déplacement dans la position sortie peuvent être actionnés par une même source de pression (12).

8. Vérin selon la revendication 6 ou 7, **caractérisé en ce que** le cylindre (7) présente une conduite d'arrivée (25) pour un gaz de travail qui s'étend dans le sens de déplacement du piston (18, 22) et **en ce qu'**une saillie de verrouillage (26) du piston est retenue dans la conduite d'arrivée (25) par un verrou transversal (30).

9. Vérin selon la revendication 8, **caractérisé en ce que** la saillie de verrouillage (26) remplit la section libre de la conduite d'arrivée (25).

10. Vérin selon la revendication 8 ou 9, **caractérisé en ce que** le verrou transversal (30) présente une face frontale (31) exposée au gaz de travail et peut être repoussé hors de la conduite d'arrivée (25) par la pression de travail sur la face frontale (31).

11. Vérin selon la revendication 10, **caractérisé en ce que** le verrou transversal (30) est resserré en direction de sa face frontale (31).

12. Vérin selon la revendication 10 ou 11, **caractérisé en ce que** le verrou transversal (30) passe à travers un alésage (29) de la saillie de verrouillage (26) et présente au moins une nervure (37) qui touche la surface intérieure de l'alésage (29).

13. Vérin selon la revendication 12, **caractérisé en ce que** l'alésage (29) présente une section ronde et le verrou transversal (30) une section polygonale.

14. Vérin selon l'une des revendications 10 à 13, **caractérisé en ce que** le verrou transversal (30) présente à une extrémité opposée à sa face frontale (31) un épaulement (32) qui recouvre l'alésage (29).
